# EUROPÄISCHE PATENTANMELDUNG

(11) **EP 0 863 633 A2**
(43) Veröffentlichungstag der Anmeldung: **09.09.1998**
(21) Anmeldenummer: 98103691.6
(22) Anmeldetag: 03.03.1998
(51) Int. Cl.: H04J 3/06

(54) **Automatische Ersatzschaltung von Primärreferenzquellen in synchronen Netzen**

(30) Priorität: 03.03.1997 DE 19708506
(71) Anmelder: Lucent Technologies Network Systems GmbH, 90411 Nürnberg (DE)
(72) Erfinder: Walter, Harald, Dipl.-Ing., D-90427 Nürnberg (DE); Wenzel, Robert, Dipl.-Ing., D-90587 Obermichelbach (DE)
(74) Vertreter: Blumbach, Kramer & Partner GbR

(57) **Zusammenfassung**

Die Erfindung bezieht sich auf ein Verfahren und eine Vorrichtung zur automatischen Ersatzschaltung von Primärreferenzquellen in synchronen Netzen, wobei zur Übertragung einer SSM-Information (Synchronisation Status Message) eine Steuerleitung zwischen SASE-Synchronisations-Equipment (Stand Alone Synchronisation Equipment) und einem Netzwerkelement (SDH-NE, Synchronous Digital Hierarchy Network Element) verwendet wird.

## Beschreibung

Die Erfindung bezieht sich auf ein Verfahren und eine Vorrichtung zur automatischen Ersatzschaltung von Primärreferenzquellen in synchronen Netzen (CSE-3 Synchronisation Distribution, Protection and Management).

Die Eigenschaften eines Primärreferenztaktes (Primary Reference Clock, PRC) sind in der ITU-T Empfehlung G.811 und in ANSI Stratum 1 festgelegt. Vereinfacht handelt es sich dabei um einen Referenztaktgeber, der ein Takt- oder Synchronisationssignal zur Verfügung stellt, welches eine Langzeitabweichung gegenüber UTC (Universal Time Coordinated) von maximal 1 x 10 exp (-11) aufweist. Die Generierung dieses Zeitsignals kann vollständig autonom erfolgen. Sie kann aber auch in Abhängigkeit von direkt aus der UTC abgeleiteten Signalquellen erfolgen.

Ein Gerät, weiches einen PRC-Takt erzeugt, weist in der Regel eine Signalquelle und eine Signalverarbeitung sowie eine Ausgangsschnittstelle auf. Bei einem autonomen PRC ist die Signalquelle ein hoch stabiler Referenzoszillator, der als Cäsium-, Maser- oder Rubidiumoszillator implementiert ist. Bei einer nicht autonomen Generierung des Zeitsignals ist dieser Referenzoszillator selbst auf ein externes Signal synchronisiert. Dies kann von einem GPS-Empfänger (Global Positioning System) oder einem Empfänger von Zeitsignalen anderer Art, z. B. DCF77, LORAN-C, GLONASS, abgeleitet sein. Die Ausgangsschnittstelle stellt ein Takt- oder Datensignal zur Verfügung, weiches sich direkt aus dem Signal des Referenzoszillators ableitet, Als Ausgangssignale stehen 2048 kHz, 2048 kbit/s, 1544 kbit/s, 1 MHz, 5 MHz oder 10 MHz nach G.811 zur Auswahl, wobei auch andere Signale denkbar sind. Aus Gründen der Verfügbarkeit sind der Referenzoszillator und die Ausgangsschnittstelle häufig redundant vorhanden. Die Signalverarbeitung wählt dann in Abhängigkeit vieler Kriterien eines der Referenzoszillatorsignale oder auch ein Mittelwertsignal für die Ausgangsschnittstelle aus. Die Konfiguration und Alarmanzeige des PRC erfolgt über ein Bedienterminal. Dieses über eine Datenleitung angeschlossene Bedienterminal kann auch an einem anderen Ort stehen.

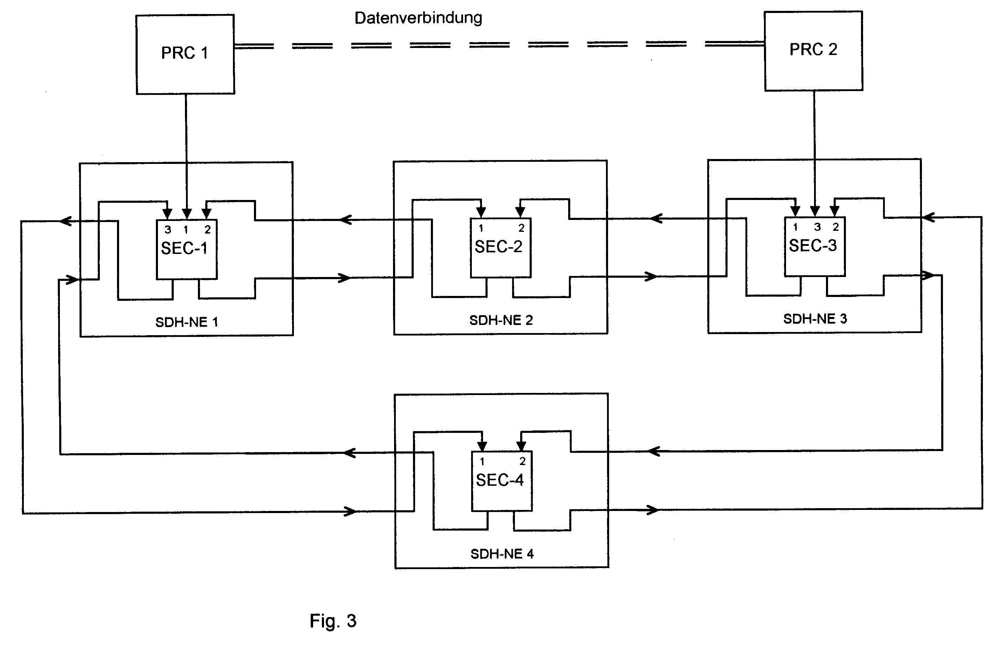

Um die Verfügbarkeit von PRCs zu erhöhen, sind diese in der Regel doppelt im Netz vorhanden. Um gegen äußere Einwirkungen besser geschützt zu sein, empfiehlt es sich, die PRCs an geographisch unterschiedlichen Standorten zu positionieren (Ersatzschaltung geographisch redundanter PRCs). Diese sogenannte "geographische Redundanz" gewährleistet die höchste Verfügbarkeit. Bei Ausfall eines PRC muß der andere im Netz verbleibende PRC die zentrale Taktung übernehmen. Ein PRC fungiert als Master (PRC1) im Netz, während der andere als Slave (PRC2) fungiert. Damit der Slave bei Ausfall des Masters selbst zum Master werden kann, muß jener die Information über den Ausfall des Masters erhalten. Dazu wird üblicherweise ein separater Datenkanal im SDH-Netz (Synchrone Digitale Hierarchy), z. B. eine 64 kbit/s-Datenleitung, verwendet, vgl. Figur 3. Auf diesem Datenkanal wird die Statusinformation des Masters zum Slave übertragen und umgekehrt. Eine solche Lösung ist besonders aufwendig und kostenintensiv, da für die Ein- und Auskopplung des Datensignals in das STM-Signal (Synchronous Transport Multiplex) ein separates Equipment notwendig ist. Außerdem ist dieser Kanal ebenfalls doppelt oder redundant zu führen, um einen Ersatzweg bei Ausfall zur Verfügung zu stellen.

Der Erfindung liegt daher die Aufgabe zugrunde, ein Verfahren und eine Vorrichtung zur automatischen Ersatzschaltung von Primärreferenzquellen im Störungsfall anzugeben. Diese Aufgabe wird erfindungsgemäß gelöst durch die Merkmale des Anspruchs 1 bzw. 2.

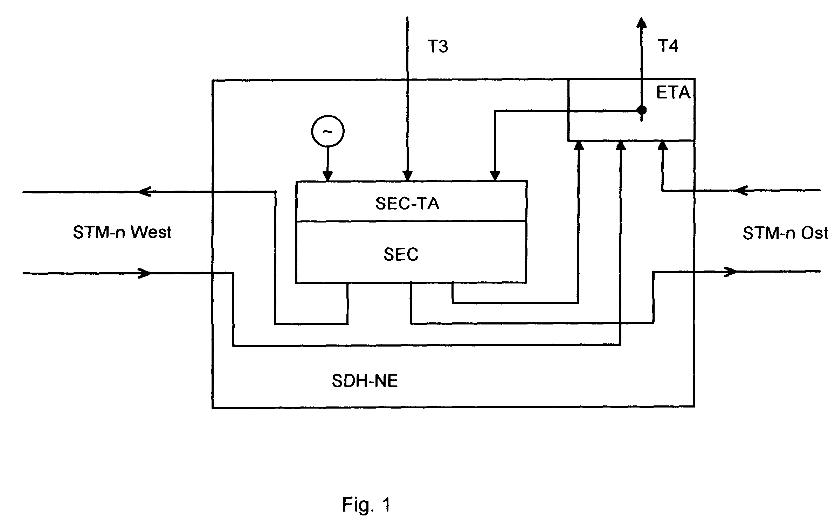

Die Erfindung wird nachfolgend unter Bezugnahme auf die Figuren 1 bis 4 anhand von Ausführungsbeispielen näher erläutert.

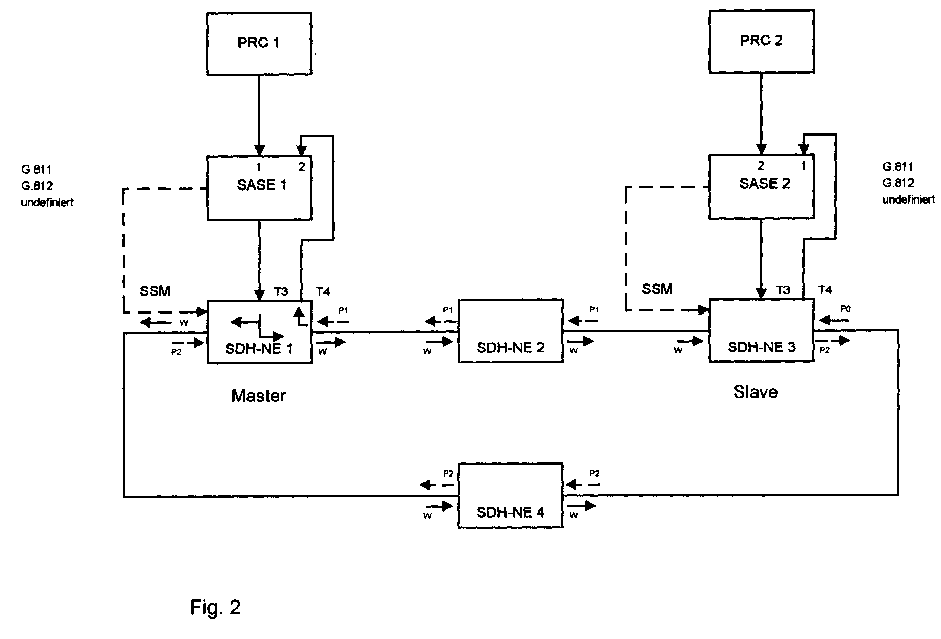

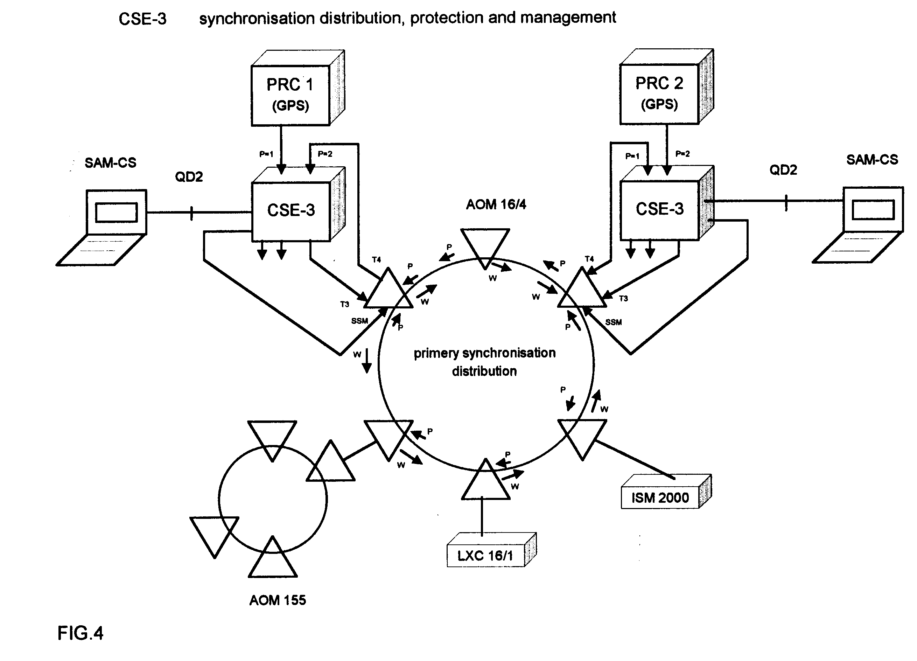

Gemäß den Figuren 2 und 4 speist im ungestörten Betrieb die als Master fungierende Taktquelle PRC 1 den Primärtakt in das Netz ein, wobei alle SDH-Netzwerkelemente SDH-NEₙ, von dieser Taktquelle PRC1 mit dem Netztakt versorgt werden. Der Signalweg der Taktversorgung verläuft - beginnend bei der Taktquelle PRC1 - über den Priorität-1-Eingang eines SASE1 (Stand Alone Synchronisation Equipment) und über T3 zu dem SDH-Netzwerkelement SDH-NE1. Dieses speist alle STM-n Ausgänge mit diesem Takt. Das Netzwerkelement SDH-NE3 empfängt die Taktqualität SSM = G.811 (Synchronisation Status Message) über das Netzwerkelement SDH-NE2 als Betriebsweg (W) und über das Netzwerkelement SDH-NE4 auf dem Ersatzweg (PO). Das Netzwerkelement SDH-NE3 gibt über T4 den über den Betriebsweg W (Working) empfangenen Takt über den Priorität-1-Eingang an das Equipment SASE2 weiter. Durch das Vorhandensein eines Priorität-1-Eingangssignals bleibt das Priorität-2-Eingangssignal der zweiten Taktquelle PRC2 im Normalbetrieb unberücksichtigt.

Fällt nun die Taktquelle PRC1 infolge einer Betriebsstörung aus, so entfällt das Priorität-1-Signal des Equipments SASE1. Das Priorität-2-Signal des Equipments SASE1 ist zu dieser Zeit nicht vorhanden, da sowohl das Netzwerkelement SDH-NE2 als auch das Netzwerkelement SAH-NE4 die Information SSM = DNU (Do Not Use for Timing) senden. Das Signal an T3 des Netzwerkelements SDH-NE1 fällt jedoch nicht aus, da das Equipment SASE1 in den Zustand "Holdover" geht. Da das Netzwerkelement SDH-NE1 aus dem T3-Sinus-Signal nicht erkennen kann, welche Taktqualität es hat, wird diesem Netzwerkelement SDH-NE1 über die SSM-Steuerleitung die Information SSM = G.812T mitgeteilt. Daraufhin setzt das Netzwerkelement SDH-NE1 diese Qualitätsstufe in das SSM-Byte aller STM-n-Signale ein, wobei n für 1, 2, 4, 16, 64 gemäß Recommandation ITU-T G.707 steht. Damit erfahren alle mit dem Netzwerkelement SDH-NE1 verketteten Netzwerkelemente diese Taktqualitätsänderung und können ihrerseits darauf reagieren. Das Netzwerkelement SDH-NE3 schaltet daraufhin den T4-Taktausgang ab, da es sowohl auf dem Betriebsweg W als auch auf dem Protection-Weg PO diese Taktqualität erhält.

Das Equipment SASE2 schaltet nun auf den Priorität-2-Takteingang um und gibt weiterhin einen Takt der Qualitätsstufe SSM = G.811 über T3 an das Netzwerkelement SDH-NE3 ab. Über die SSM-Steuerleitung wird weiterhin die Taktqualität SSM = G.811 signalisiert. Das Netzwerkelement SDH-NE3 gibt auf allen abgehenden STM-n-Signalen die Taktqualität SSM = G.811 ab. Daraufhin synchronisieren sich jetzt alle anderen Netzwerkelemente SDH-NEₙ auf den neuen Taktlieferanten, d. h. auf das Netzwerkelement SDH-NE3, um. Dieses wird nun von der Taktquelle PRC2 über das Equipment SASE2 mit dem Ersatzprimärtakt PRC2 versorgt. Das Netzwerkelement SDH-NE2 erhält nun sowohl auf dem Protection-Weg P1 als auch auf dem Working-Weg P2 Taktsignale der SSM = G.811-Qualität.

Um eine Taktschleife über das Equipment SASE1 und eine Rücksynchronisation auf eine "Pseudo"-PRC1 zu verhindern, muß eine Unterscheidung der Equipments SASE1 und SASE2 erfolgen. Grund hierfür ist, daß das Signal am Priorität-2-Eingang des Equipments SASE1 ein Abschalten des Holdover bewirkt, was äquivalent der Rückkehr des PRC1-Signals ist. Die Unterscheidung kann dadurch erfolgen, daß das Equipment SASE1 funktional zum Master und das Equipment SASE2 zum Slave erklärt werden. Das Equipment SASE1 darf deshalb erst nach Rückkehr des Priorität-1-Eingangs wieder eine Taktsignal der Qualität SSM = G.811 aus seiner Steuerleitung abgeben. Dies bedeutet, daß das Equipment SASE1 im Ersatzschaltefall nicht die Qualitätsstufe SSM = G.811 abgeben darf, obwohl der dieser entspricht. Man kann diese Qualitätsstufe z. B. als SSM = undefiniert bezeichnen. Eine andere Alternative wäre, dem Priorität-2-Eingang fest die Qualitätsstufe SSM = G.812 zuzuordnen. Das Equipment SASE2 benötigt diese Unterscheidung nicht. Diese Funktion kann entsprechend auch in das Netzwerkelement SDH-NE1 implementiert werden, obwohl dies netzplanerisch als etwas unübersichtlich erscheint.

Die in der Figur 2 dargestellten Equipments SASE1,2 (Stand Alone Synchronisation Equipment) sind jeweils ein eigenständiges Synchronisations-Equipment als Träger der Taktversorgungseinheit SSU (Synchronisation Supply Unit). Eine SSU ist eine logische Funktion, welche Synchronisationseingänge von verschiedenen Quellen akzeptiert und eine dieser Quellen auswählt sowie dies entsprechend filtert und das resultierende Signal nach außen abgibt. Die Eigenschaften dieser Filterfunktion sind in den Empfehlungen ITU-T G.812 und ETSI DE/TM-3017-4 festgelegt. Sind alle Synchronisationsquellen ausgefallen oder nicht mehr zur Synchronisation verwendbar, so gibt die SSU ihr internes Oszillatorsignal nach außen ab, wobei es den letzten Synchronisationszustand gespeichert hat. Dieser sogenannte "Holdover-Modus" muß gewissen Anforderungen genügen, welche ebenfalls in den genannten Spezifikationen definiert sind. Weil sich das Ausgangssignal der SSU von einer externen Synchronisationsquelle ableitet, wird diese auch als Slave-Clock bezeichnet. Der interne Synchronisations- und Betriebszustand der SSU gibt Aufschluß über die Qualität des Ausgangssignals. Dieser Synchronisationszustand kann nach außen signalisiert werden. Dies kann über eine Netzmanagementschnittstelle, ein Bedienterminal, über eine gewisse Anzahl von Alarmkontakten oder unter bestimmten Bedingungen über das Signal selbst erfolgen. Ist das Ausgangssignal ein 2048 kbit/s-Signal, so kann dessen Qualität in den sogenannten SSM (Synchronisation Status Message) in den SA-Bits des Datensignals kodiert werden. Dies ist in ITU-T G-704 beschrieben. Ist das Ausgangssignal ein 2048 KHz-Signal, so gibt es keine Möglichkeit die Taktqualität direkt im Signal zu kodieren.

Ein Netzwerkelement SDH-NE (Network Element der Synchronen Digitalen Hierarchy) mit den für die Synchronisation wesentlichen Funktionsblöcken ist in Figur 1 dargestellt. Es umfaßt in dem hier gezeigten Modell für ein charakteristisches SDH-NE die Informationseingänge STM-n-Ost und -West sowie einen Funktionsblock ETA (Eingangstaktauswahl) und einen Funktionsblock SEC (Synchronous Equipment Clock). Der über die Informationseingänge ankommende Signaltakt wird im ETA gemäß festgelegter oder programmierbarer Prioritäts- und Qualitätsmerkmale ausgewählt und als T4 zur internen oder externen Weiterverarbeitung abgegeben. T4 ist zur Zeit in ITU-T G.707 als sinusförmiges 2048 kHz-Signal festgelegt. Die Signalprioritäten sind üblicherweise frei programmierbar. Die Takt-Qualitätsmerkmale der STM-n Signale werden üblicherweise durch die im Signal enthaltene SSM (in ITU TG.707 definiert) festgelegt. Sie können aber auch programmiert werden.

Die Taktauswahl im Funktionsblock SEC erfolgt ähnlich der ETA. Üblicherweise hat der SDH-NE-interne Oszillator die niedrigste Priorität bei den möglichen Taktquellen. Zu beachten ist, daß in benachbarten SDH-NEs der zum Takt liefernden SDH-NE zurückgegebene Takt als SSM die Information "DNU" erhalten muß, um Taktschleifen zu vermeiden. Eine potentielle Fehlfunktion des Systems ist durch eine äußere Schleifung des Taktes von T4 nach T3 gegeben. Eine interne Taktschleife von ETA nach SEC-TA (SEC-Taktauswahl) und wieder zurück ist programmtechnisch verhindert.

### Verwendete Abkürzungen:

- ANSI: American National Standards Institut
- DNU: Do Not Use for Timing
- ETA: Eingangs-Takt-Auswahl
- ETSI: European Telecommunication Standards Institut
- GPS: Global Positioning System
- ITU-T: International Telecommunication Union-Telecommunication Sector
- PRC: Primary Reference Clock
- SASE: Stand Alone Synchronisation Equipment
- SDH: Synchronous Digital Hierarchy
- SDH-NE: SDH-Network Element
- SEC: Synchronous Equipment Clock
- SEC-TA: SEC-Taktauswahl
- SSM: Synchronisation Status Message
- SSU: Synchronisation Supply Unit
- STM-n: Synchronous Transport Multiplex-n
- UTC: Universal Time Coordinated

## Patentansprüche

1. Verfahren zur automatischen Ersatzschaltung von Primärreferenzquellen in synchronen Netzen, bei dem zur Übertragung einer SSM-Information (Synchronisation Status Message) eine Steuerleitung zwischen SASE-Synchronisations-Equipment (Stand Alone Synchronisation Equipment) und einem Netzwerkelement (SDH-NE, Synchronous Digital Hierarchy Network Element) verwendet wird.

2. Verfahren nach Anspruch 1, mit folgenden Schritten:
Im ungestörten Betrieb speist eine als Master fungierende Taktquelle (PRC 1) einen Primärtakt ein, wobei alle SDH-Netzwerkelemente (SDH-NE1 - SDH-NE4) von dieser Taktquelle (PRC 1) über einen Priorität-1-Eingang eines Equipments (SASE1) und über eine erste Steuerleitung (T3) mit dem Netztakt versorgt werden;
ein erstes Netzwerkelement (SDH-NE1) speist alle STM-n-Ausgänge mit diesem Takt;
ein drittes Netzwerkelement (SDH-NE3) empfängt die Taktqualität SSM = G.811, zum einen über den Betriebsweg (W) über SDH-NE2 und zum anderen über Ersatzweg (P0);
das dritte Netzwerkelement (SDH-NE3) gibt über eine zweite Steuerleitung (T4) den über den Betriebsweg (W) empfangenen Takt über den Priorität-1-Eingang an ein zweites Equipment (SASE2) weiter, wobei das Priorität-2-Eingangssignal der zweiten Taktquelle aufgrund des Priorität-1-Eingangssignals unberücksichtigt bleibt.

3. Verfahren nach Anspruch 1 oder 2, mit folgenden Schritten:
Bei einem Ausfall des Primärreferenztaktes (PRC 1) geht das erste Equipment (SASE 1) in den Zustand "Holdover", wobei ein an der ersten Steuerleitung (T3) anstehendes Signal weiterhin bestehen bleibt;
über eine SSM-Steuerleitung wird dem ersten Netzwerkelement (SDH-NE1) eine Information SSM = G.812T mitgeteilt;
das erste Netzwerkelement (SDH-NE1) setzt diese Qualitätsstufe in ein SSM-Byte aller STM-Signale ein, wobei die Information-SSM sowohl über den Betriebsweg (W) als auch über den Protection-Weg (P0) verläuft;
das dritte Netzwerkelement (SDH-NE3) schaltet seinen zweiten Taktausgang (T4) ab;
das zweite Equipment (SASE2) schaltet auf Priorität-2-Takteingang um und gibt weiterhin einen Takt der Qualitätsstufe SSM = G.811 über seine erste Steuerleitung (T3) und über die SSM-Steuerleitung die Taktqualität SSM = G.811 an das dritte Netzwerkelement (SDH-NE3) ab;
das dritte Netzwerkelement (SDH-NE3) gibt auf allen abgehenden STM-n-Signalen die Taktqualität SSM = G.811 ab;
die anderen Netzwerkelemente (SDH-NEₙ) synchronisieren sich auf den neuen Taktgeber (SDH-NE3), der von einer zweiten Taktquelle (PRC2) über das zweite Equipment (SASE2) versorgt wird, wobei das zweite Netzwerkelement (SDH-NE2) die Taktsignale der SSM = G.811-Qualität sowohl über Protection-Weg (P1) als auch über Betriebsweg (W) erhält.

4. Verfahren nach Ansprüchen 1 bis 3, mit den folgenden Schritten:
Die beiden Equipments (SASE1, SASE2) werden durch erklären dieser zu Master bzw. Slave voneinander unterschieden, wodurch vermieden wird, daß eine Taktschleife über das erste Equipment (SASE1) und eine Rücksynchronisation auf eine Pseudo-PRC1 gebildet wird.

5. Vorrichtung zur automatischen Ersatzschaltung von Primärreferenzquellen in Synchronen Netzen, mit einem über eine Steuerleitung zur Übertragung einer SSM-Information (Synchronisation Status Message) mit einem Netzwerkelement (SDH-NE, Synchronous Digital Hierarchy Network Element) verbundenen SASE-Synchronisations-Equipment (Stand Alone Synchronisation Equipment).

6. Vorrichtung nach Anspruch 5, dadurch gekennzeichnet, daß die Equipments (SASE1, SASE2) jeweils ein eigenständiges Synchronisations-Equipment als Träger einer Taktversorgungseinheit (SSU) sind.

7. Vorrichtung nach Anspruch 5 oder 6, dadurch gekennzeichnet, daß die SSU eine logische Funktion ist, welche Synchronisationseingänge von verschiedenen Quellen akzeptiert.

8. Vorrichtung nach einem der Ansprüche 5 bis 7, dadurch gekennzeichnet, daß das Netzwerkelement (SDH-NE) Informationseingänge (STM-n-West, STM-n-Ost) sowie einen Funktionsblock (ETA) und einen Funktionsblock (SEC) umfaßt.
